# EUROPÄISCHE PATENTSCHRIFT

(11) **EP 3 469 298 B1**
(45) Veröffentlichungstag und Bekanntmachung des Hinweises auf die Patenterteilung: **10.08.2022**
(21) Anmeldenummer: 17733991.8
(22) Anmeldetag: 12.06.2017
(51) Int. Cl.: F41H 7/03, F41H 5/02, B60H 1/00, B60H 1/26

(54) **FAHRZEUG MIT EINER TRIEBWERKSKÜHLANLAGE**
VEHICLE HAVING AN ENGINE-COOLING SYSTEM
VÉHICULE ÉQUIPÉ D'UN SYSTÈME DE REFROIDISSEMENT DE MOTEUR

(30) Priorität: 13.06.2016 DE 102016110770; 08.11.2016 DE 102016121372
(43) Veröffentlichungstag der Anmeldung: 17.04.2019
(73) Patentinhaber: Rheinmetall Landsysteme GmbH, 29345 Unterlüß (DE)
(72) Erfinder: ECKHOFF, Detlev, 24238 Selen (DE); LEPTHIEN, Dirk, 24214 Blicksted (DE); LEIBER, Florian, 24114 Kiel (DE)
(74) Vertreter: Dietrich, Barbara
(86) Internationale Anmeldenummer: PCT/EP2017/064293
(87) Internationale Veröffentlichungsnummer: WO 2017/216109

(56) Entgegenhaltungen:
- EP-A1- 2 182 317
- DE-A1- 2 040 285
- DE-A1- 4 228 865
- US-A- 2 397 809
- US-A- 4 242 951
- US-A- 4 598 785

## Beschreibung

Die Erfindung beschäftigt sich mit einer Triebwerkskühlung für ein insbesondere gepanzertes Fahrzeug. Speziell betrifft die Erfindung ein Systemkonzept für eine Front- oder Heckkühlanlage, nutzbar als Triebwerkskühlung.

Bei militärischen Fahrzeugen, wie zum Beispiel Kampfpanzer Leopard oder Marder, ist das Antriebssystem als Gesamttriebwerksblock ausgelegt, bestehend aus Motor und angeflanschten Schaft-, Wende- und Lenkgetriebe. Der Motor befindet sich frontseitig oder wie beim Leopard 2 heckseitig im Fahrzeug. Die Kühl- und Abgasanlage ist ihrerseits im Heckteil untergebracht, um die Infrarotsignatur der Front so niedrig wie möglich zu halten. Die Lüfter der Kühlanlage befinden sich auf dem hinteren Wannendach unter einer Zusatzpanzerung. Dabei sitzen die Lüfter z.B. beim Mader bedingt durch eine Heckklappe des Fahrzeugs links und rechts neben dieser Heckklappe, nach oben gerichtet, im Fahrzeugheck. Am Fahrzeug sind die notwendigen Kühlein- und Kühlaustritte der Kühlanlage mit einem, den gradlinigen Durchtritt von Geschossen, Splittern oder dergleichen verhindernden, Gräting abgedeckt.

Ein Panzer-Gräting sowie ein Gräting zur beschusssicheren Abdeckung von Lufteintritts- und Luftaustrittsöffnungen werden in der DE 20 40 285 A1, der DE 79 20 402 U1 bzw. der DE 15 78 345 C3 näher betrachtet.

Eine Vorrichtung für Triebwerkskühler von Geländefahrzeugen offenbart die DE 42 23 223 A1.

Die Ansaugöffnung wird durch ein ballistisches Schutzgitter abgeschirmt. Zur Verhinderung des Eindringens von Feststoffanteilen, wie Erde, Sand und Staub, ist bei der vorgeschlagenen Anordnung vorgesehen, dass eine Ansaugöffnung für die Kühlluft an der Fahrzeugrückseite angeordnet ist. Durch eine im Winkel zur Ebene der Ausgangsöffnung vorgeschaltete Begrenzungswand, wird eine, dem Boden zugewandte Einlauföffnung für einen sich nach oben verjüngenden Ansaugschacht gebildet.

Eine Vorrichtung zur Vermeidung von Triebwerkraumverschmutzungen beschreibt auch die DE 20 2006 003 956 U1. Hier ist ein Zyklonfilter vor einem Axialgebläse aber hinter einem Schutz- bzw. Beschussgräting angebaut.

Nachteilig bei der Einbindung von ballistischen Grätings, insbesondere im Ein- und Auslassbereich der Kühlluft, ist, dass die Luft durch die Grätings angesaugt und abgeführt werden muss. Dazu ist ein leistungsstarker Lüfter notwendig. Starke Lüfter sind ihrerseits groß und haben einen großen Lüfterwiderstand. Zudem sind diese sehr teuer.

Hier stellt sich die Erfindung die Aufgabe, diese Nachteile zu vermeiden und eine Triebwerkskühlung aufzuzeigen, die unter Einhaltungen des notwendigen ballistischen Schutzes eine ausreichende Kühlung realisiert.

Gelöst wird die Aufgabe durch die Merkmale des Patentanspruchs 1. Vorteilhafte Ausgestaltungen sind den Unteransprüchen entnehmbar.

Der vorliegenden Erfindung liegt dabei die Idee zugrunde, eine Triebwerkskühlung mit einem optimalen Schutzkonzept hinsichtlich der Leistung bei minimalem Gewicht und geringen Kosten vorzusehen.

Zur Gewichtseinsparung sieht die DE 1 262 145 A bereits vor, zwischen einem Flüssigkeitskühler und einem Gräting ein Abweisgitter anzuordnen und die Wandung des Kühlluftschachtes zwischen dem Abweisgitter und dem Gräting mit einem Belag aus einer zähweichen Masse auszukleiden. Dadurch können die Gräting in einer gewichtssparenden Formgebung ausgeführt werden. Jedoch sind Grätings weiterhin notwendig.

Vorgeschlagen wird daher ein anderer Lösungsweg, nämlich eine maximale Kühlleistung unter Einhaltung der Schutzanforderung bei minimaler Antriebsleistung durch eine Minimierung des Strömungswiderstandes zu erreichen. Im Ergebnis dieser Idee wird auf die Verwendung eines ballistischen Gräting, insbesondere vor einem Kühllufteintritt, verzichtet. Der Kühlluftaustritt wird bevorzugt ebenfalls ohne ballistische Wirkung (Schutz) realisiert.

Grundidee ist, insbesondere den / die Kühllufteintritt(e) der Kühlanlage so in das Fahrzeug einzubinden, dass dieser Kühllufteintritt bzw. der Ansaugbereich oberhalb des Wannendachs, im Zwischenraum der aufgeständerten (beabstandeten) Zusatzschutzplatte(n) liegt, sodass auf ein Gräting hier verzichtet werden kann.

Dabei wird erfindungsweisend davon ausgegangen, dass ein geschütztes Fahrzeug bereits mittels eines Wannendachs abgedeckt ist, auf dem zur Verbesserung des Schutzes zumindest eine, bevorzugt mehrere Zusatzschutzplatten mit Abstandshaltern montiert sind als adaptiver Schutz.

Die Zusatzschutzplatte(n) ist / sind durch die Abstandshalter vom Wannendach bzw. vom Fahrzeugchassis beabstandet. Die Zusatzschutzplatten weisen zudem einen, insbesondere im Heckbereich, nach unten weisenden Kragen auf, der dabei über das Fahrzeugchassis hinausreichen sollte. Bevorzugt ist der Kragen umlaufend ausgebildet. In diesem Fall steht / stehen die Schutzplatte(n) seitlich umlaufend über und überdeckt / überdecken das Fahrzeugchassis.

Durch das Beabstanden der Zusatzschutzplatten vom Fahrzeugchassis bzw. vom Wannendach und dem bevorzugt umlaufenden Kragen, wird eine umlaufende Öffnung geschaffen, die als Kühllufteintritt(e) genutzt werden kann / können. Dieser umlaufende Kragen bildet dabei einen ballistischen Schutz für das Fahrzeug wie auch eine ballistische Abdeckung für den / die Kühllufteintritt(e).

Unterhalb des Kühllufteintritts ist im Kühlluftstrom ein Kühlmittelkühler eingebunden, der mit einem Lüfter funktional in Verbindung steht. Als Lüfter kann ein einfacher Axiallüfter oder Radiallüfter verwendet werden mit entsprechender Ansaugleistung. Dieser drückt die gekühlte Luft aus dem wenigstens einen Kühlluftaustritt.

Das vorliegende Schutzkonzept sieht erweiternd vor, nur einen Bereich oberhalb des Kühlluftaustritts von außen zu schützen und nicht mehr den gesamten Heckbereich. Um jedoch einen ausreichenden Schutz zu gewährleisten, kann ein weiterer Schutz innerhalb des Fahrzeugs eingebunden sein. Dieser Schutz kann zwischen der Kühlanlage und dem Fahrzeuginneren platziert werden. Auch ein Schutz der Kühlanlage von unten ist vorsehbar. Für den Kühlluftaustritt selbst kann auf einen ballistischen Schutz jedoch verzichtet werden.

Weist das Fahrzeug einen Heckausstieg bzw. eine Heckklappe auf, kann die Kühlanlage in einen rechten und in einen linken Kühler aufgeteilt werden. Diese umfassen dann jeweils zumindest den einen Kühllufteintritt, zumindest den einen darauf ausgerichteten Kühlmittelkühler und zumindest den einen damit funktional in Verbindung stehenden Lüfter. Der Ausgang des Lüfters ist auf mindestens einen Kühlluftaustritt gerichtet.

Anhand eines Ausführungsbeispiels mit Zeichnung soll die Erfindung näher erläutert werden. Es zeigt:

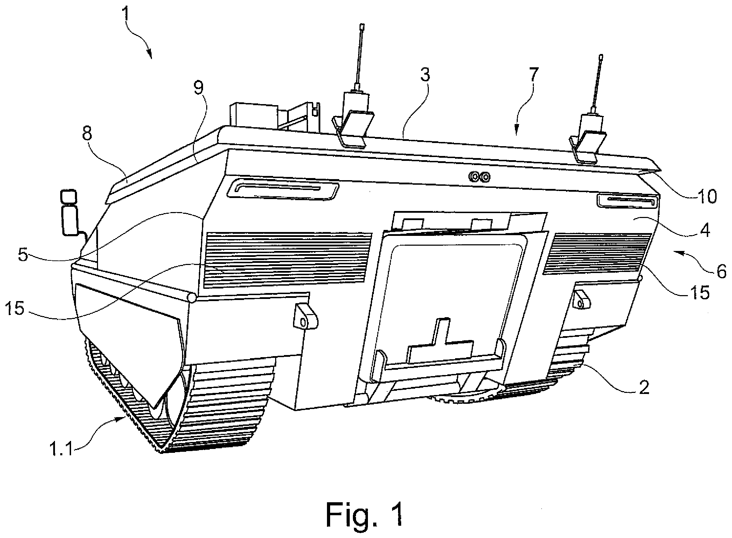

Fig. 1 eine Heckansicht eines Fahrzeugs mit einer Heckklappe,
Fig. 2 einen Längsteilschnitt durch einen rechten Kühler des Fahrzeugs aus Fig. 1,
Fig. 3 einen Längsschnitt durch einen linken Kühler des Fahrzeugs aus Fig. 1.

Mit 1 ist ein gepanzertes Fahrzeug, hier mit einer Gleiskette 1.1, in einer Heckansicht dargestellt. In diesem Ausführungsbeispiel befindet sich heckseitig, bevorzugt mittig, eine Heccklappe 2. Eine Kühlanlage 3 (Triebwerkskühlanlage) ist beidseitig der Hecklappe 2 eingebunden und in einen rechten Kühler 4, sowie einen linken Kühler 5, aufgeteilt. Das Fahrzeug 1 bzw. dessen Chassis 6 ist durch wenigstens eine Zusatzschutzplatte 7 von oben abgedeckt. Die Zusatzschutzplatte 7 ist vom Fahrzeugchassis bzw. Wannendach 6 beabstandet und weist einen umlaufenden Kragen 8 auf, der über das Fahrzeugchassis 6 allseitig hinausragt.

Durch diesen hinausragenden Kragen 8 entsteht eine Öffnung 9, die als Kühllufteintritt(e) 10 genutzt werden kann / können. Diese Öffnung 9 wird durch den Kragen 8 selbst geschützt. Der Kragen 8 bildet dadurch auch einen ballistischen Schutz für den / die Kühllufteintritt(e) 10.

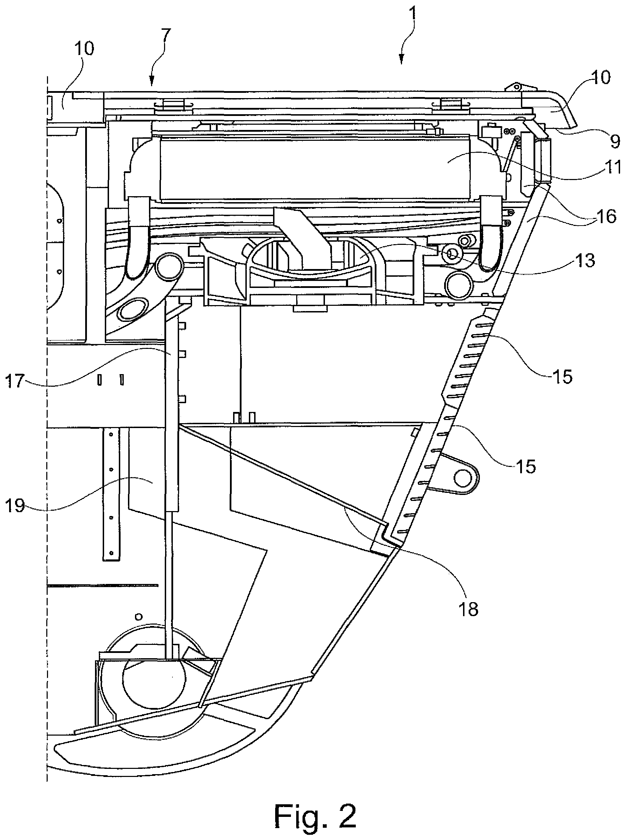

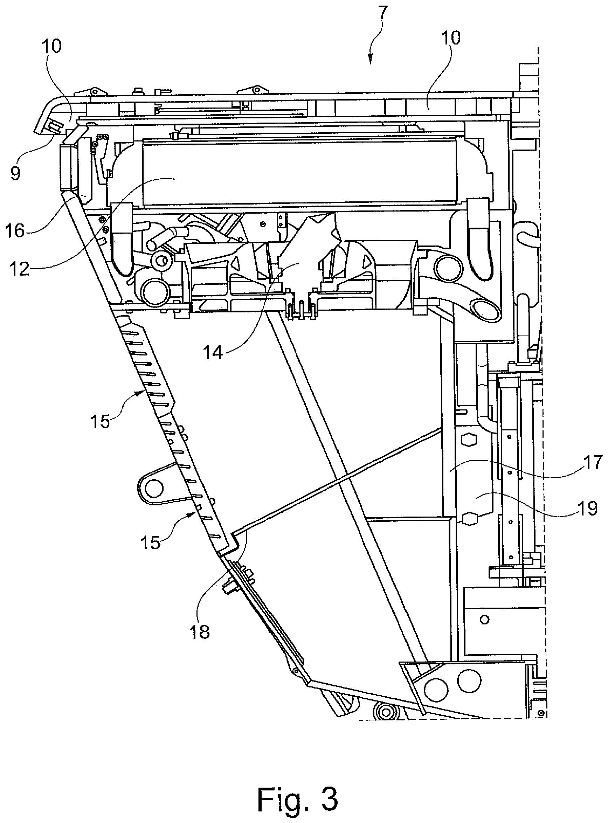

Fig. 2 und 3 zeigen den Ein- und Aufbau des rechten bzw. des linken Kühlers 4, 5 im Fahrzeug 1. Die Kühler 4, 5 umfassen jeweils als eine wesentliche Baugruppe einen Kühlmittelkühler 11, 12, dem jeweils ein Lüfter 13, 14 funktional zugeordnet ist. Der Ausgang des jeweiligen Lüfters 13, 14 (nicht näher dargestellt) ist auf zumindest einen Kühlluftaustritt 15 ausgerichtet. Dieser Kühlaustritt 15 selbst ist ohne ballistische Wirkung. Als Lüfter 13, 14 können Axiallüfter verwendet werden.

Schutzplatten 16 außen am Wannendach 6 sind bevorzugt nur im Bereich der Kühlmittelkühler 11, 12 und der Lüfter 13, 14 vorgesehen. Weitere Schutzplatten 17 sind im Fahrzeuginneren 19, z.B. Mannschaftsraum, vorgesehen. Diese schotten das Fahrzeuginnere 19 vom jeweiligen Kühler 4, 5 ab. Dabei hat sich als ausreichender Schutz erwiesen, wenn die Schutzplatten 17 im Fahrzeug 1 und die äußeren Schutzplatten16 eine geschlossene, wenngleich versetzte, Schutzlinie nachbilden. Die Schutzplatten 16, 17 müssen sich räumlich nicht überlappen. Daher ist es ausreichend, wenn die innere Schutzplatte 17 des rechten Kühlers 4 bzw. die innere Schutzplatte 17 des linken Kühlers 5 im Fahrzeug 1 in der Höhe dort endet, wo die äußere Schutzplatte 16 am Fahrzeug 1 ansetzt bzw. der Schutz beginnt.

Die Einbindung weiterer Schutzplatten 18, die vorzugsweise schräg ausgerichtet zwischen der / den inneren Schutzplatten 17 und dem unteren Kühlluftaustritt 15 eingebracht sind, sollten vorgesehen werden, wenn ein Schutz der Kühler 4, 5 nach unten als notwendig erscheint.

## Patentansprüche

1. Fahrzeug (1) mit einem Wannendach (6), einer Zusatzpanzerung (7) und einer Kühlanlage (3) für ein Triebwerk des Fahrzeugs (1), aufweisend zumindest einen Kühler (4, 5) mit wenigstens einem Kühlmittelkühler (11, 12) sowie einem Lüfter (13, 14), wobei das Fahrzeug (1) durch die Zusatzpanzerung (7) von oben abgedeckt ist, wobei die Zusatzpanzerung (7) vom Wannendach (6) beabstandet ist und einen umlaufenden Kragen (8) aufweist, der über das Wannendach (6) hinausragt, wodurch eine Öffnung (9) geschaffen wird, die als Kühllufteintritt (10) der Kühlanlage (3) genutzt werden kann.

2. Fahrzeug (1) nach Anspruch 1, **dadurch gekennzeichnet, dass** äußere Schutzplatten (16) am Fahrzeug (1) außen nur im Bereich des Kühlmittelkühlers (11, 12) und des Lüfters (13, 14) vorgesehen sind.

3. Fahrzeug (1) nach Anspruch 2, **dadurch gekennzeichnet, dass** die äußeren Schutzplatten (16) außen am Fahrzeug (1) im Heckbereich vorgesehen sind.

4. Fahrzeug (1) nach Anspruch 1 oder 2, **dadurch gekennzeichnet, dass** der Lüfter (13, 14) auf einen Kühlluftaustritt (15) gerichtet ist.

5. Fahrzeug (1) nach einem der Ansprüche 1 bis 3, **dadurch gekennzeichnet, dass** der Kühlaustritt (15) selbst ohne ballistische Wirkung ist.

6. Fahrzeug (1) nach einem der Ansprüche 1 bis 4, **dadurch gekennzeichnet, dass** die Kühlanlage (3) derart im Fahrzeug (1) eingebunden ist, dass diese rechts und / oder links einer Heckklappe (2) des Fahrzeugs (1) je einen Kühler (4, 5) aufweist.

7. Fahrzeug (1) nach einem der Ansprüche 1 bis 6, **dadurch gekennzeichnet, dass** Im Inneren des Fahrzeugs (1) Schutzplatten (17) angeordnet sind, die das Fahrzeuginnere (19) vom jeweiligen Kühler (4, 5) abschotten.

8. Fahrzeug (1) nach Anspruch 7, **dadurch gekennzeichnet, dass** weiterer Schutzplatten (18) schräg ausgerichtet zwischen der inneren Schutzplatte (17) und dem unteren Kühlluftaustritt (15) eingebracht sind.

## Claims

1. Vehicle (1) with a hull roof (6), additional armouring (7) and a cooling system (3) for an engine of the vehicle (1), having at least one cooler (4, 5) with at least one coolant cooler (11, 12) and also a fan (13, 14), the vehicle (1) being covered from above by the additional armouring (7), the additional armouring (7) being spaced away from the hull roof (6) and having a peripheral collar (8), which protrudes beyond the hull roof (6), thereby creating an opening (9), which can be used as a cooling air inlet (10) of the cooling system (3).

2. Vehicle (1) according to Claim 1, **characterized in that** outer protective plates (16) are only provided on the outside of the vehicle (1) in the region of the coolant cooler (11, 12) and the fan (13, 14).

3. Vehicle (1) according to Claim 2, **characterized in that** the outer protective plates (16) are provided on the outside of the vehicle (1) in the rear region.

4. Vehicle (1) according to Claim 1 or 2, **characterized in that** the fan (13, 14) is directed towards a cooling air outlet (15).

5. Vehicle (1) according to one of Claims 1 to 3, **characterized in that** the cooling outlet (15) itself has no ballistic effect.

6. Vehicle (1) according to one of Claims 1 to 4, **characterized in that** the cooling system (3) is incorporated in the vehicle (1) in such a way that it has a cooler (4, 5) respectively to the right and/or left of a tailgate (2) of the vehicle (1).

7. Vehicle (1) according to one of Claims 1 to 6, **characterized in that** arranged in the interior of the vehicle (1) are protective plates (17), which close off the vehicle interior (19) from the respective cooler (4, 5).

8. Vehicle (1) according to Claim 7, **characterized in that** further protective plates (18) are incorporated such that they are aligned at an angle between the inner protective plate (17) and the lower cooling air outlet (15).

## Revendications

1. Véhicule (1), comprenant un toit en caisson (6), un surblindage (7) et un système de refroidissement (3) pour un mécanisme moteur du véhicule (1), présentant au moins un refroidisseur (4, 5) pourvu d'au moins un refroidisseur de réfrigérant (11, 12) ainsi que d'un ventilateur (13, 14), le véhicule (1) étant couvert par le haut par le surblindage (7), le surblindage (7) étant espacé du toit en caisson (6) et présentant un rebord périphérique (8) qui dépasse du toit en caisson (6) de façon à ménager une ouverture (9) qui peut être utilisée comme une entrée d'air de refroidissement (10) du système de refroidissement (3).

2. Véhicule (1) selon la revendication 1, **caractérisé en ce que** des panneaux de protection extérieurs (16) sont prévus sur le véhicule (1) à l'extérieur uniquement au niveau du refroidisseur de réfrigérant (11, 12) et du ventilateur (13, 14).

3. Véhicule (1) selon la revendication 2, **caractérisé en ce que** les panneaux de protection extérieurs (16) sont prévus à l'extérieur du véhicule (1) dans la partie arrière.

4. Véhicule (1) selon la revendication 1 ou 2, **caractérisé en ce que** le ventilateur (13, 14) est tourné vers une sortie d'air de refroidissement (15).

5. Véhicule (1) selon l'une quelconque des revendications 1 à 3, **caractérisé en ce que** la sortie de refroidissement (15) en tant que telle n'a pas d'effet balistique.

6. Véhicule (1) selon l'une quelconque des revendications 1 à 4, **caractérisé en ce que** le système de refroidissement (3) est intégré dans le véhicule (1) de telle sorte qu'il présente respectivement un refroidisseur (4, 5) à droite et/ou à gauche d'un hayon (2) du véhicule (1).

7. Véhicule (1) selon l'une quelconque des revendications 1 à 6, **caractérisé en ce qu'**à l'intérieur du véhicule (1), des panneaux de protection (17) sont disposés qui cloisonnent l'intérieur du véhicule (19) par rapport au refroidisseur (4, 5) respectif.

8. Véhicule (1) selon la revendication 7, **caractérisé en ce que** d'autres panneaux de protection (18) orientés en biais sont inclus entre le panneau de protection intérieur (17) et la sortie d'air de refroidissement inférieure (15) .
